(19) Europäisches Patentamt
European Patent Office
Office européen des brevets

(11) **EP 1 503 093 B1**

(12) **EUROPÄISCHE PATENTSCHRIFT**

(45) Veröffentlichungstag und Bekanntmachung des Hinweises auf die Patenterteilung:
**29.01.2014   Patentblatt 2014/05**

(51) Int Cl.:
***F16C 1/22*** *(2006.01)*

(21) Anmeldenummer: **04017634.9**

(22) Anmeldetag: **26.07.2004**

(54) **Bowdenzugaggregat mit Spieleinstellvorrichtung**

Bowden cable unit with adjusting device

Dispositif de rattrapage de jeu pour câble Bowden

(84) Benannte Vertragsstaaten:
**DE FR**

(30) Priorität: **26.07.2003   DE 10334224**

(43) Veröffentlichungstag der Anmeldung:
**02.02.2005   Patentblatt 2005/05**

(73) Patentinhaber: **Kiekert Aktiengesellschaft
42579 Heiligenhaus (DE)**

(72) Erfinder: **Bendel, Thorsten
46149 Oberhausen (DE)**

(74) Vertreter: **Nunnenkamp, Jörg et al
Andrejewski Honke
Patentanwält
Postfach 10 02 54
45002 Essen (DE)**

(56) Entgegenhaltungen:
**EP-A- 0 251 582      FR-A- 2 689 189
GB-A- 2 260 588      US-A1- 2001 019 118**

## Beschreibung

Die Erfindung betrifft die Verwendung einer Spieleinstellvorrichtung an einem Bowdenzugaggregat, für Kraftfahrzeugtürverschlüsse, mit einem Bowdenzug mit Bowdenzughülle und Bowdenzugseele, wobei die Spieleinstellvorrichtung den Abstand zwischen einem Befestigungspunkt der Bowdenzugseele und einem Anschlag für die Bowdenzughülle verändert, und wobei die Spieleinstellvorrichtung mit einem im Betrieb am Bowdenzugaggregat verbleibenden Anschlagelement sowie einem im Betrieb vom Bowdenzugaggregat entfernten Einstellelement ausgebildet ist.

Eine Spieleinstellvorrichtung der eingangs beschriebenen Ausgestaltung zur Verwendung bei einem Türgriff wird im Rahmen der DE 100 02 215 C1 beschrieben. Hier geht es insgesamt um den bereits angesprochenen Türgriff, welcher mit einer Seilzuganordnung kombiniert ist. Die Seilzuganordnung verfügt über eine Längeneinstell-Vorrichtung für einen Außenzug. Ein Betätigungsglied des Türgriffes ist mit je einem Ende des Innenzuges des Seilzuges verbunden. Zusätzlich sind Fixierungsmittel vorgesehen, mit deren Hilfe eine Innenhülse und Außenhülse relativ zueinander festgelegt werden können. Der Außenzug besteht aus einer flexiblen Hülle mit einer steifen Verlängerung, die ihrerseits aus der Außenhülse und der Innenhülse aufgebaut ist. Die Außenhülse und die Innenhülse lassen sich gegeneinander axial verschieben.

Das bekannte Bowdenzugaggregat ist relativ kompliziert aufgebaut, wozu insbesondere die zusätzlich erforderliche Innenhülse und Außenhülse beitragen. Außerdem gestaltet sich die Spieleinstellung kompliziert und bedienerunfreundlich. Hier will die Erfindung insgesamt Abhilfe schaffen.

Der Erfindung liegt das technische Problem zugrunde, eine Spieleinstellvorrichtung für Kraftfahrzeugtürverschlüsse so weiter zu entwickeln, dass die Spieleinstellung einfach und sicher gewährleistet wird.

Zur Lösung dieser technischen Problemstellung ist Gegenstand der Erfindung die Verwendung einer Spieleinstellvorrichtung an einem Bowdenzugaggregat für Kraftfahrzeugtürverschlüsse nach Anspruch 1.

Erfindungsgemäß verfügt die Spieleinstellvorrichtung also über zumindest zwei Bestandteile, nämlich das Anschlagelement sowie das Einstellelement. Lediglich das Anschlagelement verbleibt im Betrieb am Bowdenzugaggregat, während das Einstellelement im Betrieb entfernt ist. Dadurch lässt sich ein standardisiertes Einstellelement für eine Vielzahl von Bowdenzugaggregaten zur Spieleinstellung verwenden. Das führt zu wesentlichen Kosteneinsparungen, weil Einstellbauteile entfallen. Gleichzeitig wird eine einfache und sichere Einstellung des Spiels gewährleistet.

Um die Spieleinstellung im Detail vollführen zu können, hat sich die Riffelung außenseitig der Bowdenzughülle bewährt. In diese Riffelung greift das Anschlagelement bei der Spieleinstellung verriegelnd ein. Die Riffelung stellt sicher, dass der Abstand zwischen dem Anschlag und dem Befestigungspunkt an der Bowdenzugseele über einen weiten Bereich vorgegeben werden kann.

Das Bowdenzugaggregat sorgt üblicherweise für eine Verbindung eines Außentürgriffes mit einem aus dem Kraftfahrzeugtürverschluss herausgeführten Hebel, bei dem es sich vorzugsweise um den Außenbetätigungshebel handeln kann. Es hat sich bewährt, das Anschlagelement als die Bowdenzughülle fixierendes Befestigungsmittel auszubilden. Dabei mag das Befestigungsmittel selbst als Schraube ausgeführt sein. Genauso gut kann es sich um eine Scheibe handeln, die mit einer Nase an der Bowdenzughülle zusammenwirkt. Entscheidend ist, dass das Anschlagelement zusammen mit dem Anschlag an der Bowdenzughülle für die mechanische Fixierung der Bowdenzughülle im Betrieb des Bowdenzugaggregates gegenüber der Bowdenzugseele sorgt.

In diesem Zusammenhang stellt das Einstellelement sicher, dass die relative Längenposition des Anschlagelementes im Vergleich zur Bowdenzughülle verändert wird. Dabei mag das Einstellelement als Distanzstück mit vorgegebenen Abmessungen ausgebildet sein. Eine solche Vorgehensweise empfiehlt sich beispielsweise für den Werkstattbetrieb, wenn es darum geht, einen Bowdenzug zu ersetzen. Das Distanzstück mit vorgegebenen Abmessungen wird nach der Spieleinstellung entfernt. Auf diese Weise kann das Anschlagelement gegen den Anschlag fahren und so die Position der Bowdenzughülle bzw. des Anschlages gegenüber dem Befestigungspunkt der Bowdenzugseele definiert vorgeben. Dabei mag das Anschlagelement federunterstützt gegen den Anschlag fahren, kann aber nach dem Ende der Spieleinstellung auch unmittelbar (ohne zusätzliche Federkraft) am Anschlag anliegen.

Im Fertigungseinsatz wird man dagegen regelmäßig auf ein als verstellbares Distanzstück ausgebildetes Einstellelement zurückgreifen. Wie das Distanzstück mit vorgegebenen Abmessungen wird das verstellbare Distanzstück nach der Spieleinstellung entfernt. Auch in diesem Fall ist das Anschlagelement gegebenenfalls federunterstützt in der Lage, nach der Spieleinstellung und dem Entfernen des verstellbaren Distanzstückes gegen den Anschlag zu fahren.

Für die beschriebenen Kraftfahrzeuganwendungen wird der Bowdenzug größtenteils mit einem aus dem Kraftfahrzeugtürverschluss herausgeführten Hebel verbunden. Bei diesem Hebel mag es sich um einen Außenbetätigungshebel handeln. Gleichzeitig geht der Bowdenzug eine Verbindung mit einem Außentürgriff ein. Bei diesem Anwendungsfall sorgt der Bowdenzug als Verbindungsmittel also dafür, Betätigungsbewegungen, insbesondere Ziehbewegungen am Außentürgriff auf den Außenbetätigungshebel des Kraftfahrzeugtürverschlusses zu übertragen, so dass ein im Innern des Kraftfahrzeugtürverschlusses befindliches Gesperre durch diesen Vorgang geöffnet wird. Die zugehörige Kraftfahrzeugtür kommt frei.

Ein Bowdenzug an dieser Stelle hat den Vorteil, dass seine Funktionalität auch dann gegeben ist, wenn die Kraftfahrzeugtür durch beispielsweise einen Seitenaufprall eine Beschädigung erfahren hat. Die an dieser Stelle in der Vergangenheit zumeist eingesetzten Stangenverbindungen können dagegen eine sichere Funktionsweise nicht (immer) gewährleisten.

Insgesamt muss dafür gesorgt werden, dass mit Hilfe der beschriebenen Spieleinstellvorrichtung auch ein sogenannter Überhub des Bowdenzuges beherrscht wird. Das bedeutet, die Länge des Bowdenzuges wird entsprechend der maximalen, beim Bedienvorgang benötigten Länge eingerichtet. Dieser Überhub führt zu erheblichem Spiel in der gesamten Betätigungskette, Bowdenzug-Hebel etc.. Präzise Mechaniken innerhalb des Kraftfahrzeugtürverschlusses tolerieren ein solches Spiel jedoch nicht. Aus diesem Grund findet das Einstellelement erst dann Verwendung, wenn der Befestigungspunkt an der Bowdenzugseele und der Anschlag an der Bowdenzughülle einen vorgegebenen Abstand aufweisen. Dieser korrespondiert meistens dazu, dass eine Sperrklinke im Kraftfahrzeugtürverschluss ihre Blockadeposition einnimmt bzw. ihre maximal zurückgezogene Stellung aufweist. Der vorgegebene Abstand korrespondiert also zu einer mechanischen Blockadeposition von einerseits dem Hebel und andererseits dem Außentürgriff. Dadurch lässt sich der eigentliche Bedienvorgang, welcher sich an die beschriebene Blockadeposition anschließt, mit (geringem) einstellbaren Spiel einrichten.

Bei der Spieleinstellung bei einem Bowdenzugaggregat der eingangs beschriebenen Gestaltung nehmen der Befestigungspunkt an der Bowdenzugseele und der Anschlag an der Bowdenzughülle eine vorgegebene Abstandsposition (Blockadeposition) zueinander ein. Anschließend sorgt das Einstellelement üblicherweise ggf. unter Abstandsvergrößerung dafür, dass der Bowdenzug den Befestigungspunkt und ein weiteres Element, z. B. den Außentürgriff, spielfrei miteinander verbindet. Zu diesem Zweck wird das Anschlagelement eingesetzt, welches die Bowdenzughülle und folglich dessen Anschlag in einem Abstand vom Befestigungspunkt an der Bowdenzugseele fixiert, welcher zu einem vorgegebenen, insbesondere minimalen, Spiel des Bowdenzugs korrespondiert. Abschließend wird das Einstellelement entfernt.

Im Folgenden wird die Erfindung anhand einer lediglich ein Ausführungsbeispiel darstellenden Zeichnung näher erläutert; es zeigen:

**Fig. 1** ein erfindungsgemäßes Bowdenzugaggregat in Kombination mit einem Kraftfahrzeugtürverschluss,

**Fig. 2** eine Variante und

**Fig. 3** einen vergrößerten Schnitt durch Fig. 2.

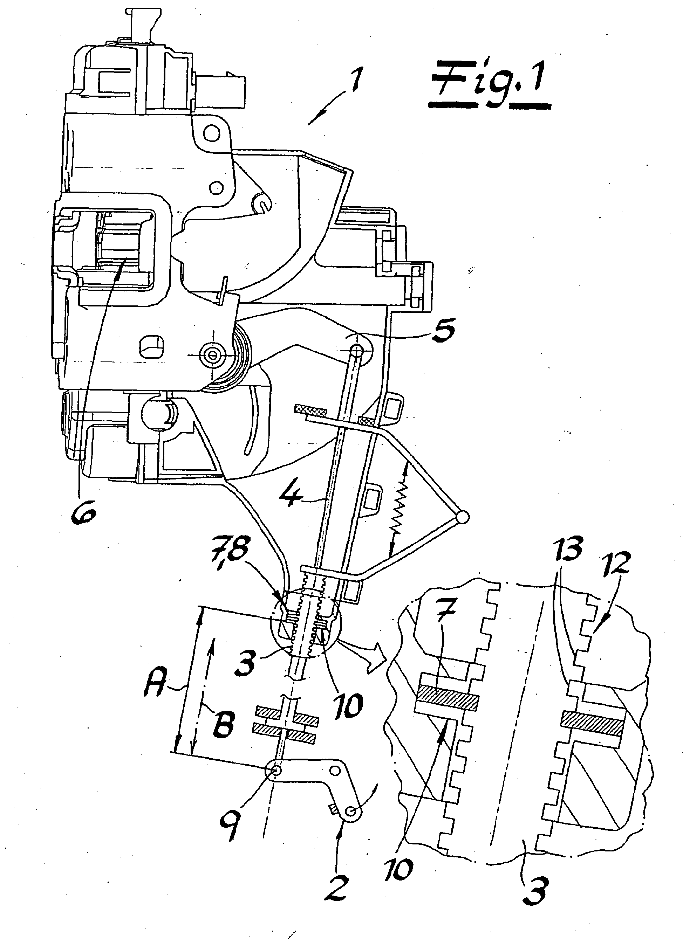

In den Figuren ist ein Bowdenzugaggregat dargestellt, welches im Rahmen der Zeichnungen einen Kraftfahrzeugtürverschluss 1 mit einem Außentürgriff 2 verbindet. Dazu arbeitet ein Bowdenzug 3, 4 mit Bowdenzughülle 3 und Bowdenzugseele 4 auf einen Außenbetätigungshebel 5 des Kraftfahrzeugtürverschlusses 1. Mit Hilfe des Außenbetätigungshebels 5 lässt sich ein nur andeutungsweise zu erkennendes Gesperre 6 öffnen. Zu diesem Zweck führt der Außentürgriff 2 eine angedeutete Schwenkbewegung im Gegenuhrzeigersinn aus (vgl. Fig. 1).

Dem Bowdenzugaggregat ist eine Spieleinstellvorrichtung 7, 8 zugeordnet. Diese setzt sich im Wesentlichen aus einem Anschlagelement 7 sowie einem Einstellelement 8 zusammen. Mit Hilfe der Spieleinstellvorrichtung 7, 8 kann der Abstand zwischen einem Befestigungspunkt 9 der Bowdenzugseele 4 und einem Anschlag 10 für die Bowdenzughülle 3 bzw. an der Bowdenzughülle 3 verändert werden. Im Betrieb des Bowdenzugaggregates verbleibt das Anschlagelement 7 am Bowdenzugaggregat, während das Einstellelement 8 entfernt wird. Auf diese Weise kommt ein standardisiertes Einstellelement 8 zum Einsatz.

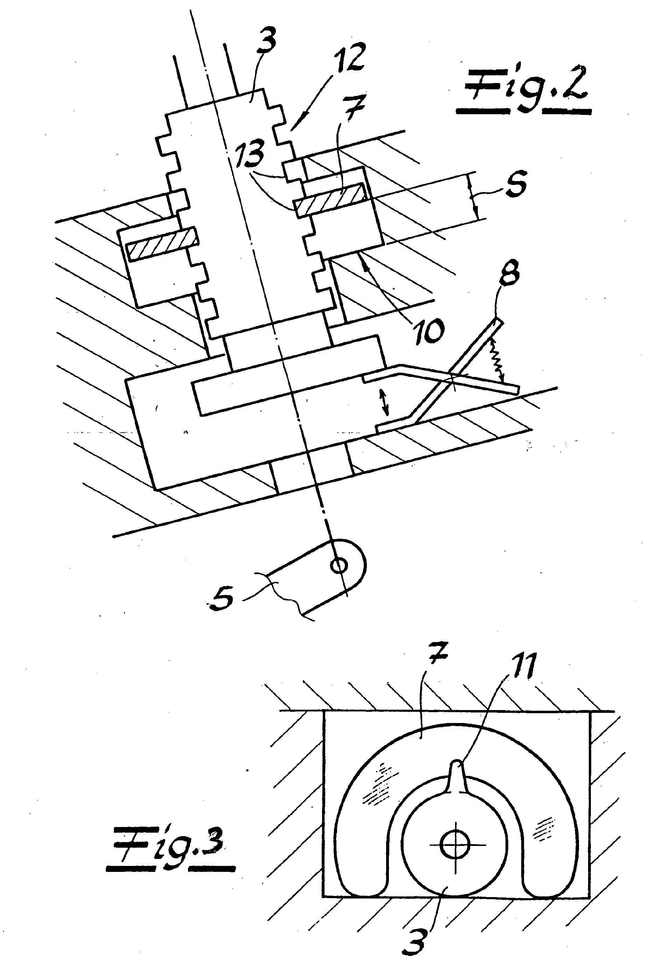

Bei dem Anschlagelement 7 handelt es sich um ein die Bowdenzughülle 3 fixierendes Befestigungsmittel 7 bzw. ein an der Bowdenzughülle 3 angebrachtes Befestigungsmittel 7. Genauso gut kann als Anschlagelement 7 aber auch eine Scheibe 7 zum Einsatz kommen, die im Rahmen der Darstellung nach Fig. 3 mit einer Nase 11 an der Bowdenzughülle 3 zusammenwirkt.

Jedenfalls sorgt das Anschlagelement 7 dafür, dass der Anschlag 10 für die Bowdenzughülle 3, welcher für sich genommen an der Bowdenzughülle 3 befestigt sein kann oder entsprechend der Darstellung nach Fig. 1 am Kraftfahrzeugtürverschluss eine Festlegung erfährt, mit Hilfe des Anschlagelementes 7 blockiert wird. Dadurch stellt sich ein gewünschter Abstand A zwischen dem Befestigungspunkt 9 und dem Anschlag 10 ein. Dieser korrespondiert zu einem vorgegebenen Spiel S des Bowdenzuges 3, 4, welches im Rahmen des Ausführungsbeispiels nach Fig. 2 ca. 1 mm beträgt. Selbstverständlich ist auch ein Spiel S von nahezu 0 mm denkbar und wird vom Erfindungsgedanken umfasst.

Mit Hilfe des Einstellelementes 8 lässt sich nun die relative Längenposition des Anschlagelementes 7 im Vergleich zur Bowdenzughülle 3 verändern. Dadurch ändert sich zwangsläufig auch die relative Längenposition des Anschlages 10 im Vergleich zur Bowdenzughülle 3. Das erreicht die Erfindung im Detail dadurch, dass die Bowdenzughülle 3 über eine außenseitige Riffelung 12 verfügt. In diese außenseitige Riffelung 12 greift beispielhaft das als Scheibe 7 ausgebildete Anschlagelement 7 ein. Tatsächlich ist das Anschlagelement 7 im Rahmen der Fig. 3 als in etwa halbkreisförmige Scheibe 7 ausgeführt, welche in eine zugehörige Nut 13 der Riffelung 12 eingreift, wobei diesen Eingriff ergänzend die Nase 11 an der Bowdenzughülle 3 unterstützen mag. Das ist jedoch nicht zwingend. Jedenfalls lässt sich das Anschlagelement 7 infolge der Riffelung 12 längenveränderlich an der Bowdenzughülle 3 anbringen.

Um dies im Einzelnen bewerkstelligen zu können, ist das Einstellelement 8 vorgesehen. Hierbei kann es sich um ein Distanzstück mit vorgegebenen Abmessungen handeln, welches nach der Spieleinstellung entfernt wird. Dadurch ist das Anschlagelement 7 in der Lage, unterstützt von einer Feder 14 gegen den Anschlag 10 zu fahren. Das deutet ein Pfeil in Fig. 2 an.

Bei der Alternative nach den Fig. 2 und 3 wird jedoch mit einem als verstellbares Distanzstück ausgebildeten Einstellelement 8 gearbeitet, welches ebenfalls nach der Spieleinstellung entfernt wird. Auch in diesem Fall fährt das Anschlagelement 7 gegebenenfalls federunterstützt gegen den Anschlag 10, nachdem das Distanzstück bzw. Einstellelement 8 entfernt worden ist.

Der Einstellvorgang geschieht wie folgt. Zunächst einmal wird im Rahmen des Beispiels eine Sperrklinke bzw. das Gesperre 6 auf Block gefahren, wobei der Außentürgriff 2 seine nicht ausgelenkte und zurückgezogene Position nach Fig. 1 einnimmt. Das Gesperre 6 findet sich als Folge hiervon in einer Stellung, aus welcher heraus unmittelbar seine Öffnung durch Betätigen des Außentürgriffes 2 betrieben werden kann.

Erst in dieser Blockadeposition findet das Einstellelement 8 Verwendung. Das heißt, der Befestigungspunkt 9 der Bowdenzugseele 4 am Außentürgriff 2 und der Anschlag 10 für die Bowdenzughülle 3 weisen einen bestimmten vorgegebenen Abstand B auf, wie er in der Fig. 1 strichpunktiert angedeutet ist. Dabei gilt regelmäßig:

$$B \leq A.$$

Jetzt kommt - wie gesagt - das Einstellelement 8 zum Zuge. Es sorgt dafür, dass der Abstand zwischen dem Befestigungspunkt 9 und dem Anschlag 10 vergrößert wird, und zwar so weit, bis der Bowdenzug 3, 4 ein vorgegebenes Spiel S aufweist. Im Rahmen der Darstellungen nach Fig. 2 wird dieses Spiel S zunächst auf ca. 0 mm eingestellt. Das heißt, der Befestigungspunkt 9 und der Anschlag 10 gehen zunächst durch die beschriebene Blockadeposition eine vorgegebene Position zueinander ein, wobei anschließend das Einstellelement für eine Vergrößerung des Abstandes sorgt, welcher vom Wert B hin zum Wert A wächst.

Nachdem die Spieleinstellung auf ca. 0 mm erreicht worden ist, wird das Anschlagelement 7 im Rahmen der Darstellung nach den Fig. 2 und 3 eingesetzt, und zwar in eine passende Nut 13 der Riffelung 12. Abschließend wird das Einstellelement 8 entfernt.

Dadurch kann das Anschlagelement 7 gegen den Anschlag 10 fahren, wobei dieser Vorgang durch die Feder 14 unterstützt werden mag. Als Folge hiervon stellt sich das gewünschte Spiel S von ca. 1 mm ein, welches selbstverständlich auch andere Werte annehmen kann.

Es versteht sich, dass die hier beschriebene Spieleinstellvorrichtung 7, 8 ergänzend mit einer weiteren Einrichtung für einen automatischen Spielausgleich kombiniert werden kann. Das heißt, mit Hilfe der vorliegend beschriebenen Spieleinstellvorrichtung 7, 8 wird das ursprüngliche Spiel S unmittelbar im Anschluss an die Fertigung bzw. Montage eingestellt. Dagegen sorgt die zusätzliche Einrichtung für den automatischen Spielausgleich dafür, dass das durch die Fertigung vorgegebene Spiel S während des gesamten Betriebes des Bowdenzuges 3, 4 beibehalten wird. Dieser automatische Spielausgleich mag ergänzend dadurch realisiert werden, dass der Außenbetätigungshebel 5 und/oder der Außentürgriff 2 zum Spielausgleich für den Bowdenzug 3, 4 seine bzw. ihre Kontur verändern. Das kann beispielsweise so realisiert werden, dass der jeweilige Hebel 2, 5 zweiteilig ausgebildet ist, wobei die beiden hierdurch gebildeten Arme eine sich ändernde Winkelstellung zueinander einnehmen. Je größer das im Betrieb auszugleichende Spiel ist, desto stärker werden die beiden Arme gegeneinander abgewinkelt, um wieder das ursprüngliche Spiel S zu erreichen.

**Patentansprüche**

1. Verwendung einer Spieleinstellvorrichtung (7, 8) an einem Bowdenzugaggregat für Kraftfahrzeugtürverschlüsse, mit einem Bowdenzug (3, 4) mit Bowdenzughülle (3) und Bowdenzugseele (4), wobei

   - die Spieleinstellvorrichtung (7, 8) den Abstand (A) zwischen einem Befestigungspunkt (9) der Bowdenzugseele (4) und einem Anschlag (10) für die Bowdenzughülle (3) verändert, wobei ferner
   - die Spieleinstellvorrichtung (7, 8) mit einem im Betrieb am Bowdenzugaggregat verbleibenden Anschlagelement (7) sowie einem im Betrieb vom Bowdenzugaggregat entfernten Einstellelement (8) ausgebildet ist, und wobei
   - die Bowdenzughülle (3) eine außenseitige Riffelung (12) aufweist, in welche das Anschlagelement (7) bei der Spieleinstellung verriegelnd eingreift.

2. Verwendung nach Anspruch 1, **dadurch gekennzeichnet, dass** das Anschlagelement (7) als die Bowdenzughülle (3) fixierendes Befestigungsmittel (7), mit einer Nase (11) an der Bowdenzughülle (3) zusammenwirkende Scheibe (7) etc., ausgebildet ist.

3. Verwendung nach Anspruch 1 oder 2, **dadurch gekennzeichnet, dass** das Einstellelement (8) die relative Längenposition des Anschlagelementes (7) im Vergleich zur Bowdenzughülle (3) verändert.

4. Verwendung nach einem der Ansprüche 1 bis 3, **dadurch gekennzeichnet, dass** das Einstellelement (8) als Distanzstück mit vorgegebenen Abmessungen ausgebildet ist, welches nach der Spieleinstellung entfernt wird.

5. Verwendung nach einem der Ansprüche 1 bis 4, **dadurch gekennzeichnet, dass** das Einstellelement (8) als verstellbares Distanzstück ausgebildet ist, welches nach der Spieleinstellung entfernt wird.

6. Verwendung nach einem der Ansprüche 1 bis 5, **dadurch gekennzeichnet, dass** das Anschlagelement (7) - gegebenenfalls federunterstützt - nach der Spieleinstellung gegen den Anschlag (10) fährt.

7. Verwendung nach einem der Ansprüche 1 bis 6, **dadurch gekennzeichnet, dass** der Bowdenzug (3, 4) einerseits mit einem aus dem Kraftfahrzeugtürverschluss herausgeführten Hebel (5), insbesondere Außenbetätigungshebel (5), und andererseits mit einem Außentürgriff (2) verbunden ist.

8. Verwendung nach einem der Ansprüche 1 bis 7, **dadurch gekennzeichnet, dass** das Einstellelement (8) erst dann Verwendung findet, wenn der Befestigungspunkt (9) an der Bowdenzugseele (4) und der Anschlag (10) für die Bowdenzughülle (3) einen vorgegebenen Abstand (B) aufweisen.

9. Verwendung nach Anspruch 8, **dadurch gekennzeichnet, dass** der vorgegebene Abstand (B) zu einer mechanischen Blockadeposition von einerseits dem Hebel (5) und/oder andererseits dem Außentürgriff (2) korrespondiert.


**Claims**

1. A use of a clearance adjustment device (7, 8) on a Bowden cable unit for motor vehicle door closures, with a Bowden cable (3, 4) with Bowden cable cover (3) and Bowden cable core (4), wherein

   - the clearance adjustment device (7, 8) alters the distance (A) between a fastening point (9) of the Bowden cable core (4) and a stop (10) for the Bowden cable cover (3), wherein in addition
   - the clearance adjustment device (7, 8) is constructed with a stop element (7) which remains on the Bowden cable unit during operation and an adjustment element (8) which is removed from the Bowden cable unit during operation, and wherein
   - the Bowden cable cover (3) has an exterior ribbing (12), into which the stop element (7) engages in a locking manner in the case of the clearance adjustment.

2. The use according to Claim 1, **characterized in that** the stop element (7) is constructed as a fastening means (7) fixing the Bowden cable cover (3), a disc (7) cooperating with a nose (11) on the Bowden cable cover (3) etc..

3. The use according to Claim 1 or 2, **characterized in that** the adjustment element (8) alters the relative longitudinal position of the stop element (7) in relation to the Bowden cable cover (3).

4. The use according to one of Claims 1 to 3, **characterized in that** the adjustment element (8) is constructed as a spacer with predetermined dimensions, which is removed after the clearance adjustment.

5. The use according to one of Claims 1 to 4, **characterized in that** the adjustment element (8) is constructed as a displaceable spacer which is removed after the clearance adjustment.

6. The use according to one of Claims 1 to 5, **characterized in that** the stop element (7) - spring-assisted, if applicable - moves after the clearance adjustment against the stop (10).

7. The use according to one of Claims 1 to 6, **characterized in that** the Bowden cable (3, 4) is connected on the one hand with a lever (5) which is directed out from the vehicle door closure, in particular external actuation lever (5), and on the other hand is connected with an exterior door handle (2).

8. The use according to one of Claims 1 to 7, **characterized in that** the adjustment element (8) is only used when the fastening point (9) on the Bowden cable core (4) and the stop (10) for the Bowden cable cover (3) have a predetermined distance (B).

9. The use according to Claim 8, **characterized in that** the predetermined distance (B) corresponds to a mechanical blocking position of on the one hand the lever (5) and/or on the other hand the exterior door handle (2).


**Revendications**

1. Utilisation d'un dispositif de réglage de jeu (7, 8) sur un ensemble à câble Bowden pour fermetures de portes de véhicule avec un câble Bowden (3, 4) avec gaine de câble Bowden (3) et âme de câble Bowden (4),

   - le dispositif de réglage de jeu (7, 8) modifiant l'intervalle (A) entre un point de fixation (9) de l'âme du câble Bowden (4) et une butée (10) pour la gaine de câble Bowden (3),
- le dispositif de réglage de jeu (7, 8) étant constitué en outre d'un élément de butée (7) restant en fonctionnement sur l'ensemble de câble Bowden ainsi que d'un élément de réglage (8) en fonctionnement éloigné de l'ensemble de câble Bowden et
- la gaine de câble Bowden (3) présentant un rainurage (12) extérieur dans lequel s'engrène en verrouillement l'élément de butée (7) lors du réglage de jeu.

2. Utilisation selon la revendication 1 **caractérisée en ce que** l'élément de butée (7) est constitué comme moyen de fixation (7) fixant la gaine de câble Bowden (3) avec un ergot (11) sur le disque (7) agissant conjointement sur la gaine de câble Bowden (3).

3. Utilisation selon la revendication 1 ou 2 **caractérisée en ce que** l'élément de réglage (8) modifie la position longitudinale relative de l'élément de butée (7) en comparaison de la gaine de câble Bowden (3).

4. Utilisation selon une quelconque des revendications 1 à 3 **caractérisée en ce que** l'élément de réglage (8) est constitué comme pièce entretoise avec des dimensions spécifiées, qui est enlevée après le réglage de jeu.

5. Utilisation selon une quelconque des revendications 1 à 4 **caractérisée en ce que** l'élément de réglage (8) est constitué comme une pièce entretoise réglable qui est enlevée après réglage de jeu.

6. Utilisation selon une quelconque des revendications 1 à 5 **caractérisée en ce que** l'élément de butée (7) (soutenu par ressort le cas échéant) va contre la butée (10) après le réglage de jeu.

7. Utilisation selon une quelconque des revendications 1 à 6 **caractérisée en ce que** le câble Bowden (3, 4) est relié d'une part avec un levier (5) sorti de la fermeture de porte de véhicule, en particulier levier (5) de commande extérieur, et d'autre part avec une poignée de porte extérieure (2).

8. Utilisation selon une quelconque des revendications 1 à 7 **caractérisée en ce que** l'élément de réglage (8) ne trouve son utilisation que si le point de fixation (9) sur l'âme de câble Bowden (4) et la butée (10) pour la gaine de câble Bowden (3) présentent un intervalle (B) spécifié.

9. Utilisation selon la revendication 8 **caractérisée en ce que** l'intervalle (B) spécifié correspond à une position de blocage mécanique du levier (5) d'une part et/ou de la poignée de porte extérieure (2) d'autre part.

EP 1 503 093 B1

Fig.1

7

Fig.2

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10002215 C1